(19) Europäisches Patentamt

European Patent Office

Office européen des brevets

(11) **EP 1 567 452 B1**

(12) **FASCICULE DE BREVET EUROPEEN**

(45) Date de publication et mention
de la délivrance du brevet:
**10.05.2006 Bulletin 2006/19**

(51) Int Cl.:
*C01G 31/00* (2006.01)      *C01G 45/00* (2006.01)
*C01G 49/00* (2006.01)      *C01G 51/00* (2006.01)
*H01M 4/58* (2006.01)      *H01M 4/48* (2006.01)
*C01B 25/45* (2006.01)

(21) Numéro de dépôt: 03799704.6

(22) Date de dépôt: **02.12.2003**

(86) Numéro de dépôt international:
**PCT/FR2003/050148**

(87) Numéro de publication internationale:
**WO 2004/052787 (24.06.2004 Gazette 2004/26)**

(54) **COMPOSES D'INSERTION DU LITHIUM SUBSTITUES AU BORE, MATERIAUX ACTIFS D'ELECTRODES, ACCUMULATEURS ET DISPOSITIFS ELECTROCHROMES**

BORON ENTHALTENDE LITHIUMINTERKALATIONSVERBINDUNGEN ZUR VERWENDUNG ALS AKTIVE MATERIALIEN FÜR ELEKTRODEN , SPEICHERMEDIEN UND ELECTROCHROMISCHE VORRICHTUNGEN

BORON-SUBSTITUTED LITHIUM COMPOUNDS, ACTIVE ELECTRODE MATERIALS, BATTERIES AND ELECTROCHROME DEVICES

(84) Etats contractants désignés:
**AT BE BG CH CY CZ DE DK EE ES FI FR GB GR HU IE IT LI LU MC NL PT RO SE SI SK TR**

(30) Priorité: **05.12.2002 FR 0215343**

(43) Date de publication de la demande:
**31.08.2005 Bulletin 2005/35**

(73) Titulaire: **COMMISSARIAT A L'ENERGIE ATOMIQUE**
**75752 Paris Cédex 15 (FR)**

(72) Inventeurs:
• **FRANGER, Sylvain**
**F-91190 GIF-SUR-YVETTE (FR)**
• **LE CRAS, Frédéric**
**F-38470 NOTRE-DAME DE L'OSIER (FR)**
• **BOURBON, Carole**
**F-38590 SAINT-MICHEL-DE-SAINT GEOIRS (FR)**

(74) Mandataire: **Poulin, Gérard**
**BREVALEX**
**3, rue du Docteur Lancereaux**
**75008 Paris (FR)**

**Description**

La présente invention concerne des composés d'insertion du lithium, plus précisément elle a trait à des composés d'insertion du lithium contenant du bore, substitués au bore, dopés au bore, à squelette polyanionique.

L'invention concerne également les matériaux actifs d'électrodes, en particulier d'électrodes positives contenant lesdits composés, ainsi que les accumulateurs et dispositifs électrochromes mettant en oeuvre ces composés.

Les accumulateurs au lithium sont de plus en plus utilisés comme sources d'énergie autonomes, en particulier, dans les équipements portables, tels que les ordinateurs, les téléphones, les assistants personnels, les caméscopes, etc., où ils tendent à remplacer progressivement les accumulateurs nickel-cadmium (NiCd) et nickel-hydrure métallique (NiMH). Cette évolution découle du fait que les performances des accumulateurs au lithium en terme de densité d'énergie (Wh/kg, Wh/1) sont largement supérieures à celles des deux filières citées précédemment.

Les composés actifs d'électrodes utilisés dans ces accumulateurs sont principalement $LiCoO_2$, $LiNiO_2$ et $LiMn_2O_4$ pour l'électrode positive et du carbone, tel que du graphite ou du coke, etc., pour l'électrode négative. Les capacités théoriques et pratiques de ces composés sont respectivement de 275 mAh/g et 140 mAh/g pour $LiCoO_2$ et $LiNiO_2$, et de 148 mAh/g et 120 mAh/g pour $LiMn_2O_4$, pour une tension de fonctionnement par rapport au lithium métallique voisine de 4 volts.

Il est prouvé que les oxydes de manganèse, et particulièrement la famille de structure spinelle $Li_{1+x}Mn_{2-x}O_4$ ($0 \leq x \leq 0,33$), sont en mesure de démontrer des performances électrochimiques comparables à celles des oxydes de cobalt et de nickel. Il apparaît de plus que la plus grande abondance naturelle du manganèse et la plus faible toxicité de ses oxydes par rapport au cobalt et au nickel sont un avantage important pour leur large utilisation dans les accumulateurs.

Dans le cas particulier de $LiMn_2O_4$, il est néanmoins établi que son usage combiné avec des électrolytes formulés pour un fonctionnement au voisinage de 4 volts par rapport au lithium métallique qui contiennent de l'hexafluorophosphate de lithium débouche sur une dissolution progressive de l'oxyde de manganèse et par voie de conséquence sur une durée de vie plus réduite de l'accumulateur.

Par ailleurs, deux familles de composés utilisés pour les réactions électrochimiques ont l'avantage d'être potentiellement peu coûteuses et non toxiques : ce sont, d'une part, la famille isotype de l'olivine et, d'autre part, la famille du Nasicon ; rappelons que la dénomination Nasicon signifie « sodium (Na) Superlonic CONductor » et que ce composé répond, en particulier, à la formule $Na_xM_2X_3O_{12}$, où M est un métal de transition et X représente P, Mo, Si, Ge, S, avec $0 < x < 5$ et, préférentiellement, $x = 3$.

Ces deux familles sont constituées d'éléments équivalents et se différencient uniquement par le rapport nombre de polyanions/nombre de lithium et par leur structure cristalline. En effet, la famille isotype de l'olivine a une maille cristalline orthorhombique et la famille isotype du Nasicon a une maille rhomboédrique.

Des matériaux de structure isotype de l'olivine à maille cristalline orthorhombique, tel que $Li_{1-x}FePO_4$, par exemple $LiFePO_4$ (triphylite) ont l'avantage d'être potentiellement peu coûteux et non toxiques. Dans le cas de $LiFePO_4$, l'insertion/extraction du lithium se déroule selon un processus biphasé à 3,45 V/Li+/Li, ce qui rend ce composé stable dans la quasi-totalité des solvants organiques. De plus, il se révèle bien plus stable à l'état chargé (« $FePO_4$ ») en présence d'électrolyte que les oxydes précédemment cités, induisant une grande sûreté d'utilisation dans les accumulateurs.

Cependant, le problème majeur de cette famille de composés est leurs faibles conductivités électronique et ionique à température ambiante. Ainsi; ceci limite la cinétique d'insertion/désinsertion du lithium au sein de la structure hôte et l'utilisation de ces composés à des régimes de charge/décharge relativement faibles.

Par ailleurs, les composés de la structure du Nasicon, c'est-à-dire dé formule $AxM_2(XO_4)_3$ où A est un métal alcalin, tel que Na présentent également un intérêt en tant que matériau actif d'électrode positive, en particulier grâce à leur conductivité ionique des ions lithium élevée. Mais, de même, que les composés de structure olivine, ils sont de mauvais conducteurs électroniques, ce qui limite leur usage.

En outre, du fait de la mauvaise cinétique électrochimique, les composés des deux familles structurales décrits plus haut ne peuvent être utilisés comme matériaux actifs dans un dispositif électrochome.

Le document US-A-6 085 015 décrit des matériaux d'insertion au lithium de type orthosilicate contenant un tétranion $SiO_4^{4-}$. Il s'agit en fait d'une sous-famille de l'olivine, à groupement silicate dans laquelle le métal de coeur, c'est-à-dire le métal participant électroniquement à la réaction électrochimique est dopé par divers autres métaux.

Les matériaux de ce document répondent à la formule générale suivante :

$$Li_xM_{N-(d+t+q+r)}D_dT_tQ_qR_r[SiO_4]_{t-(p+s+g+v+a+b)}[SO_4]_s$$

$$[PO_4]_p[GeO_4]_g[VO_4]_v[AlO_4]_a[BO_4]_b$$

dans laquelle :

- M représente $Mn^{2+}$ ou $Fe^{2+}$ et leurs mélanges ;
- D représente un métal à l'état d'oxydation +2, choisi parmi $Mg^{2+}$, $Ni^{2+}$, $Co^{2+}$, $Zn^{2+}$, $Cu^{2+}$, $Ti^{2+}$, $V^{2+}$, $Ca^{2+}$;
- T représente un métal à l'état d'oxydation +3, choisi parmi : $Al^{3+}$, $Ti^{3+}$, $Cr^{3+}$, $Fe^{3+}$, $Mn^{3+}$, $Ga^{3+}$, $Zn^{2+}$ et $V^{3+}$ ;
- Q représente un métal à l'état d'oxydation +4, choisi parmi $Ti^{4+}$, $Ge^{4+}$, $Sn^{4+}$ et $V^{4+}$;
- R représente un métal à l'état d'oxydation +5, choisi parmi $V^{5+}$, $Nb^{5+}$ et $Ta^{5+}$.

Tous les M, D, T, Q, R sont des éléments se trouvant dans des sites octahédriques ou tétrahédriques, s, p, g, v, a et b sont les coefficients stoechiométriques pour $S^{6+}$ (sulfate), $P^{5+}$ (phosphate), $Ge^{4+}$ (germanate), $V^{5+}$ (vanadate), $Al^{3+}$ (aluminate) et $B^{3+}$ (borate) respectivement se trouvant dans des sites tétrahédriques.

Les coefficients stoechiométriques d, t, q, r, p, s, v, a, b sont positifs et compris entre 0 et 1.

Les matériaux de ce document n'apportent pas une amélioration significative par rapport aux matériaux des deux formules mentionnées plus haut, à savoir de type olivine ou Nasicon. En effet, leurs conductivités électronique et ionique à température ambiante sont faibles et leur cinétique électrochimique limitée.

Le document EP-A2-1 195 827 est relatif à un procédé de préparation d'un matériau actif de cathode de formule générale :

$$LiFe_{1-y}MyPO_4$$

, où M est choisi dans le groupe constitué de Mn, Cr, Co, Cu, Ni, V, Mo, Ti, Zn, Al, Ga, Mg, B et Nb avec $0,05 \leq X \leq 1,2$ et $0 \leq y \leq 0,8$, dans lequel on mélange les matériaux de départ nécessaires à la préparation du matériau, on broie le mélange, on comprime le mélange obtenu à l'issue du broyage à une masse volumique prédéterminée et on fritte le mélange comprimé. Un matériau carboné est agité à l'une quelconque des étapes du procédé de préparation. Dans les exemples, en tant que composé comprenant du bore, on prépare uniquement le seul composé de formule $LiFe_{0,25}B_{0,75}PO_4$.

Le calcul théorique montre que ces composés présentent des capacités spécifiques théoriques très faibles, de l'ordre de 50 mAh/g.

Il existe donc un besoin non encore satisfait pour un composé d'insertion du lithium qui présente une conductivité électronique aussi bien qu'une conductivité ionique élevée et donc une excellente cinétique électrochimique, meilleures dans tous les cas que celles des composés de l'art antérieur, notamment meilleures que celles des composés de type olivine, Nasicon, ou des composés du document US-A-6 085 015.

Il existe en conséquence un besoin pour un composé d'insertion du lithium qui puisse être utilisé à des régimes de charge/décharge élevés.

Il reste aussi un besoin pour un composé d'insertion au lithium qui ait une capacité spécifique théorique élevée supérieure à celle des composés de l'art antérieur.

Ces excellentes propriétés de conductivité et de cinétique électrochimique doivent aller de pair, en particulier avec un faible coût, une faible toxicité, une grande stabilité dans les solvants organiques et électrolytes, permettant leur mise en oeuvre sur une longue durée et avec une grande fiabilité dans des dispositifs, tels que les accumulateurs et les dispositifs électrochromes.

Le but de la présente invention est de fournir un composé d'insertion du lithium qui réponde aux besoins et qui remplissent les critères indiqués ci-dessus.

Le but de la présente invention est encore de fournir un composé d'insertion du lithium qui ne présente pas les inconvénients, défauts, limitations et désavantages des composés de l'art antérieur et qui résolve les problèmes des composés de l'art antérieur.

Ce but et d'autres encore sont atteints, conformément à l'invention par un composé d'insertion du lithium répondant à la formule (I) suivante :

$$Li_\alpha M_\beta M1_v M2_w M3_x M4_y M5_z B_\gamma (XO_{4-\varepsilon} Z_\varepsilon)_1 \qquad (I)$$

- M est un élément à l'état d'oxydation +2, choisi parmi $V^{2+}$, $Mn^{2+}$, $Fe^{2+}$, $Co^{2+}$ et $Ni^{2+}$ ;
- M1 est un élément à l'état d'oxydation +1, choisi parmi $Na^+$ et $K^+$ ;
- M2 est un élément à l'état d'oxydation +2, choisi parmi $Mg^{2+}$, $Zn^{2+}$, $Cu^{2+}$, $Ti^{2+}$ et $Ca^{2+}$ ;
- M3 est un élément à l'état d'oxydation +3, choisi parmi $Al^{3+}$, $Ti^{3+}$, $Cr^{3+}$, $Fe^{3+}$, $Mn^{3+}$ $Ga^{3+}$ et $V^{3+}$;
- M4 est un élément à l'état d'oxydation +4, choisi parmi $Ti^{4+}$, $Ge^{4+}$, $Sn^{4+}$, $V^{4+}$ et $Zr^{4+}$ ;
- M5 est un élément à l'état d'oxydation +5, choisi parmi $V^{5+}$, $Nb^{5+}$, et $Ta^{5+}$ ;
- X est un élément à l'état d'oxydation m, où m est un nombre entier, par exemple de 2 à 6, résidant exclusivement en site tétraédrique et coordonné par l'oxygène ou un halogène, qui est choisi parmi $B^{3+}$, $Al^{3+}$, $V^{5+}$, $Si^{4+}$ $P^{5+}$, $S^{6+}$, $Ge^{4+}$ et leurs mélanges ;

- Z est un halogène choisi parmi F, Cl, Br et I ;
- les coefficients $\alpha$, $\beta$, v, w, x, y, z, $\gamma$ et $\varepsilon$ sont tous positifs et satisfont aux relations suivantes :

- $0 \leq \alpha \leq 2$ (1) ;
- $1 \leq \beta \leq 2$ (2) ;
- $0 < \gamma$ (3) ;
- $0 \leq \alpha \leq 2$ (3) ;
- $0 \leq \varepsilon \leq 2$ (4) ;
- $\alpha + 2\beta + 3\gamma + v + 2w + 3x + 4y + 5z + m = 8 - \varepsilon$ (5) ; et

- $0 < \dfrac{\gamma}{\beta + v + w + x + y + z} \leq 0,1$ (6).

Des composés préférés selon l'invention sont le composé dans lequel M est $Fe^{2+}$, X est P et v, w, x, y, z et $\varepsilon$ sont égaux à 0, à savoir le composé de formule :

$$Li_{\alpha}Fe_{\beta}B\gamma PO_4 \qquad (II)$$

, et le composé dans lequel M est $Mn^{2+}$, X est P et v, w, x, y et z et $\varepsilon$ sont égaux à 0, à savoir le composé de formule :

$$Li_{\alpha}Mn_{\beta}B_{\gamma}PO_4 \qquad (III)$$

De préférence encore dans les formules (II) et (III), $\alpha$ est égal à 1, et les composés (II) et (III) répondent donc alors aux formules suivantes :

$$LiFe_{\beta}B_{\gamma}PO_4 \qquad (IV)$$

et

$$LiMn_{\beta}B_{\gamma}PO_4 \qquad (V)$$

dans lesquelles $\gamma/\beta \leq 0,1$,

Des composés encore préférés sont le $LiFe_{0,95}B_{0,033}PO_4$, le $Li_3Fe_{1,93}B_{0,07}(PO_4)_3$ (cette formule rentre bien dans le cadre de la formule (I) en divisant tous les coefficients par 3, mais on préfère cette écriture car elle retranscrit que la structure de l'olivine n'est pas la même que celle du Nasicon) et le $LiMn_{0,95}B_{0,033}$.

Les composés selon l'invention peuvent être décrits comme des composés du Nasicon ou de l'olivine dopés par le bore (Z = 5, M = 10,81 g/mole), non métal.

En effet, les composés de la famille de l'olivine ou de celle du Nasicon peuvent être représentés par la formule générale $LiM(XO_4)$. Après dopage par le bore, on obtient le composé selon l'invention, de formule, par exemple (I), dans laquelle le bore, de manière fondamentale, conformément à l'invention, occupe un site cationique autre que ceux occupés par le ou les cations X du squelette polyanionique $XO_{4-\varepsilon}Z_{\varepsilon}$. En d'autres termes, le bore se place dans un site cationique, à l'exclusion des sites cationiques présents au sein des entités ou squelettes polyanioniques.

Le bore peut donc se substituer à, remplacer un Li ou un atome de métal de M, $M_1$, $M_2$, $M_3$, $M_4$, $M_5$ ou occuper un site vacant. Cette substitution, ce remplacement se réalise très facilement car le bore a un rayon ionique très faible.

Le matériau de l'invention présente une structure très particulière due à la position très spécifique, occupée par les atomes de bore dans cette structure. Cette structure différencie fondamentalement le matériau, le composé de l'invention, des composés de l'art antérieur, en particulier des composés décrits dans le document US-A-6 085 015 ou le bore fait exclusivement partie des entités polyanioniques $XO_4$.

L'addition de bore, telle qu'elle est réalisée dans le composé de l'invention, permet d'augmenter de manière significative la conduction des porteurs de charge des matériaux de base ainsi modifiés et d'obtenir des niveaux de conductivité nettement plus élevés que ceux des composés de l'art antérieur. De tels niveaux de conductivité permettant l'utilisation des composés selon l'invention dans un accumulateur au lithium, même à des régimes de charge/décharge élevés. Il a ainsi pu être démontré que les composés selon l'invention, dopés au bore, permettaient d'obtenir un gain sur la capacité délivrée, c'est-à-dire sur l'énergie disponible, par exemple de 40 %, avec une charge ou une décharge en 10 heures et, par exemple, de 65 % avec une charge ou une décharge en deux heures.

En outre, de manière fondamentale, le composé d'insertion du lithium selon l'invention est caractérisé par le fait que le bore est ajouté dans une quantité qui est inférieure ou égale à 10 % atomiques. Cette condition essentielle est reflétée par le fait que dans la formule (I), la relation (6) $0 < \dfrac{\gamma}{\beta + v + w + x + y + z} \leq 0,1$ est vérifiée, de préférence,

$0 < \dfrac{\gamma}{\beta + v + w + x + y + z} \leq 0,05$.

De manière générale, le rapport reflète un dopage et on a donc intérêt à ce qu'il soit le plus faible possible pour une efficacité donnée.

Dans le document EP-A2-1 195 827, mentionné plus haut, des matériaux actifs de cathode sont décrits, mais dans ces composés de formule $Li_xFe_{1-y}M_yPO_4$, où M peut être B, le coefficient y va de 0 à 0,8, tandis que dans les exemples de ce document, seul le composé spécifique $LiFe_{0,25}B_{0,75}PO_4$ (rapport de l'équation (6) = 0,75/0,25 = 3) est explicitement mentionné.

Dans ce document est donc divulgué une plage très large pour l'addition, de bore, qui va de 0 (inclus) à 0,8, donc les rapports de l'équation (6) sont de 0 à 3.

La plage revendiquée pour le dopage en bore selon l'invention est telle que cette teneur permet d'obtenir le rapport de l'équation (6) inférieur ou égal à 0,1, la plage selon l'invention est donc très étroite par rapport à la plage divulguée dans le document EP-A2-1 195 827. En outre, la plage selon l'invention est très éloignée de la seule et unique valeur de 0,75 (rapport de l'équation (6) égal à 3) explicitement divulguée dans les exemples spécifiques du document EP-A2-1 195 827.

Il a été mis en évidence que les composés selon l'invention, qui ont une teneur de dopage en bore se situant dans cette gamme spécifique très étroite, présentaient une capacité spécifique théorique très élevée, qui est, de manière étonnante, beaucoup plus élevée que celles des composés possédant une teneur en bore se situant dans l'intervalle très large du document EP-A2-1 195 827. Ainsi, à titre d'exemple, on a pu montrer que la capacité spécifique théorique du composé $LiFe_{0,25}B_{0,75}PO_4$, qui est le seul composé donné en exemple dans le document EP-A2-1 195 827 était environ 3 fois plus faible que la capacité spécifique théorique du composé $LiFe_{0,95}B_{0,05}PO_4$, conforme à l'invention et où la teneur en bore se situe dans la plage très étroite selon l'invention.

Ceci montre, de manière évidente, qu'un effet technique nouveau, différent de tout effet obtenu dans la plage de teneur en bore large de la demande européenne citée plus haut, est réalisé dans la plage étroite selon l'invention.

Cet effet concernant une augmentation considérable de la capacité théorique spécifique est surprenant, inattendu. En effet, rien ne laissait prévoir que en choisissant un tel intervalle spécifique, étroit pour la teneur en bore de dopage, on obtiendrait une telle augmentation de la capacité théorique spécifique.

Sans vouloir être lié par aucune théorie, on peut expliquer, a posteriori, que le bore se substitue au métal actif. Or, la capacité spécifique est proportionnelle au nombre d'ions, par exemple, $Fe^{2+}$, qui se transforment, par exemple, en ions $Fe^{3+}$, lors de la désintercalation du lithium. On peut donc considérer que toute diminution de la concentration, par exemple, en Fe, sera préjudiciable et que la substitution par le bore doit rester un dopage, c'est-à-dire être faible, c'est-à-dire de l'ordre de moins de 10 %.

L'amélioration importante de la cinétique de la réaction électrochimique obtenue avec les composés de l'invention par rapport aux composés de l'art antérieur, mais aussi, entre autres, l'absence de toxicité, la grande stabilité, le faible coût des composés dé l'invention les rend particulièrement adéquats pour une mise en oeuvre dans les batteries au lithium, ainsi que dans d'autres dispositifs, tels que les dispositifs électrochromes.

L'invention concerne également un procédé de préparation du composé d'insertion du lithium dopé au bore de formule (I).

Le procédé consiste à faire réagir les éléments nécessaires à la formation d'un composé de structure olivine ou Nasicon avec au moins un composé du bore, afin d'obtenir le composé d'insertion du lithium de formule (I) selon l'invention. Ledit composé au bore, appelé encore précurseur boré, étant un composé de formule $BXO_{4-\epsilon}Z_\epsilon$ (VI), où X, Z et $\epsilon$ ont la signification déjà donnée plus haut.

Dans le procédé selon l'invention et de manière fondamentale, le composé au bore ou précurseur boré est introduit sous une forme très particulière, à savoir la forme B (polyanion). En effet, pour éviter que le bore ne se place dans le produit final de formule (I) dans les sites du polyanion et pour que la structure spécifique du composé (I) selon l'invention soit obtenue, il faut que le bore, lors de la synthèse du composé de formule (I), soit sous une forme telle qu'il ne puisse plus se lier avec les ions oxygène du polyanion. Ce but est atteint dans le procédé de l'invention,' en évitant d'utiliser en tant que précurseur boré les borates ou les oxydes de bore et en utilisant spécifiquement un composé du bore sous la forme B (polyanion).

Le composé du bore ou précurseur est choisi préférentiellement parmi les composés $BPO_4$, $BVO_4$, $BAsO_4$ et le verre $2B_2O_3$-$3SiO_2$ et leurs mélanges.

Le procédé, de synthèse du composé de l'invention peut être un procédé par voie sèche ou un procédé par voie humide.

Ces procédés, leurs étapes respectives et les conditions opératoires de ces étapes sont bien connues de l'homme du métier et ne seront pas décrits en détail dans la présente description ; on pourra se référer pour une description détaillée de ces procédés de synthèse aux documents suivants : « A Powder Neutron Diffraction Investigation of the Two Rhombohedral Nasicon Analogues : $\gamma$-Na$_3$Fe$_2$(PO$_4$)$_3$ and Li$_2$Fe$_2$(PO$_4$)$_3$ » par C. MASQUELIER et al., Chem. Matter. 2000, 12, 525-532 ; et « Optimized LiFePO$_4$ for Lithium Battery Cathodes » par A. YAMADA et al., Journal of the Electrochemical Society, 148 (3), A224-A229 (2001). Le procédé selon l'invention est toutefois fondamentalement caractérisé par la mise en oeuvre de précurseurs spécifiques qui, seuls, permettent d'obtenir la structure spécifique des composés de formule (I) selon l'invention.

En d'autres termes, le procédé selon l'invention se distingue des procédés connus par le fait qu'il utilise des précurseurs borés spécifiques de type B(polyanion).

Lorsque le procédé se déroule par voie sèche, les matériaux de départ, c'est-à-dire essentiellement les éléments pour obtenir le composé de structure olivine ou Nasicon, nécessaires à la formation de celui-ci, et le composé du bore ou précurseur boré sont sous forme de poudres et le procédé comprend une étape de traitement thermique.

Lorsque le procédé se déroule par voie humide, les matériaux de départ sont ajoutés à un solvant et le procédé comprend une étape de cristallisation.

Que le procédé soit un procédé par voie sèche ou un procédé par voie humide, c'est l'utilisation dans le procédé de l'invention des composés du bore, précurseurs borés spécifiques ci-dessus qui leur confère leur structure spécifique et leurs propriétés avantageuses.

L'invention concerne, en outre, des matériaux actifs d'électrode, en particulier d'électrode positive contenant un ou plusieurs composés, tels que décrits plus haut.

Dans de tels matériaux actifs d'électrode, en particulier d'électrode positive, les composés selon l'invention peuvent éventuellement être associés à un ou plusieurs autres composés actifs (c'est-à-dire autres que les composés de l'invention), tels que les composés classiques, comme LiCoO$_2$, LiNiO$_2$, les oxydes de manganèse, en particulier, de structure spinelle Li$_{1+x}$Mn$_{2-x}$O$_4$ (avec $0 \leq x \leq 0,33$), par exemple LiMn$_2$O$_4$, les composés de la famille isotype de l'olivine, tels que Li$_{1-x}$FePO$_4$, par exemple LiFePO$_4$, les composés de la structure du. Nasicon, les matériaux d'insertion du lithium du type orthosilicate décrits dans le document US-A-6 085 015, et les matériaux décrits dans le document EP-A2-1 195 827.

L'invention concerne, en outre, une électrode positive comprenant le matériau actif, tel qu'il est décrit plus haut.

Outre le matériau actif d'électrode proprement dit, une électrode positive selon l'invention comprend généralement un matériau conducteur électronique, qui est, de préférence, du carbone sous une forme quelconque, tel que le noir de carbone, le noir d'acétylène, le graphite ou le coke.

L'électrode positive comprend, en outre, un liant polymère.

Ledit liant polymère est choisi généralement parmi les polymères fluorés, les élastomères et les composés cellulosiques.

Le polymère fluoré peut être choisi, par exemple, parmi les polymères et copolymères du fluorure de vinylidène et les polymères et copolymères du tétrafluoroéthylène.

L'électrode positive comprend généralement de 75 à 95 % en poids de matériau actif, de 2 à 15 % en poids de matériau conducteur et de 3 à 10 % en poids de liant polymère.

Pour préparer l'électrode positive, on mélange le matériau actif d'électrode, le matériau conducteur et le liant polymère dissout dans un solvant, tel que l'acétone ou la N-méthyl pyrrolidone. On applique le mélange, par exemple par enduction sur un substrat en un matériau conducteur, par exemple en aluminium, généralement sous la forme d'une feuille, et on sèche le substrat sur lequel a été appliqué le mélange par chauffage, éventuellement sous vide.

L'invention est relative, en outre, à un accumulateur, tel qu'un accumulateur au lithium, comprenant ladite électrode positive.

Un tel accumulateur comprend généralement, outre ladite électrode positive, une électrode négative, un séparateur et un électrolyte. L'électrode négative peut être réalisée par un matériau choisi généralement parmi le lithium métallique, les alliages de lithium, un titanate de lithium.

Le séparateur est généralement réalisé en un polymère microporeux, choisi, par exemple, parmi les polyoléfines .

Enfin, l'électrolyte comprend un solvant et un sel conducteur ; le solvant est généralement choisi parmi le carbonate d'éthylène, le carbonate de propylène, le carbonate de diméthyle, le carbonate de diéthyle, le carbonate d'éthyle et de méthyle, la $\gamma$-butyrolactone, le sulfolane, les éthers de dialkyle (en C$_{1-4}$) d'éthylène glycol ou de polyéthylène glycol, par exemple de diéthylène glycol, triéthylène glycol, tétraéthylène glycol, et leurs mélanges.

Un solvant préféré est un mélange de carbonate d'éthylène et de carbonate de diméthyle.

Le sel conducteur est un sel de lithium choisi généralement parmi l'hexafluorophosphate de lithium, LiPF$_6$, LiAsF$_6$, LiSbF$_6$, LiBF$_4$, LiTFSI (lithium bis(trifluoromêthanesulfonyl)imide) et leurs mélanges.

L'invention concerne enfin un dispositif électrochrome comprenant le composé selon l'invention.

Dans un tel dispositif électrochrome, le composé ou un matériau comprenant le composé selon l'invention est souvent sous forme d'un dépôt sur un substrat, par exemple sur du verre. Le passage de courant, c'est-à-dire l'intercalation/désintercalation du lithium, modifie les propriétés optiques du matériau, par exemple la couleur de celui-ci, il est ainsi possible d'obtenir une vitre dont la couleur varie. Sinon, le fonctionnement est identique à celui de l'accumulateur.

L'invention sera mieux comprise à la lecture de la description qui va suivre, d'exemples de réalisation de l'invention, faite à titre illustratif et non limitatif, en référence aux dessins joints, dans lesquels :

- la figure 1 est un graphique montrant la courbe de cyclage intentiostatique du composé de l'exemple 1 ($LiFe_{0,95}B_{0,033}PO_4$) à deux régimes différents (C/10 (0,05 mA/cm$^2$): courbe en traits pointillés ; C/2 (0,26 mA/cm$^2$) : courbe en trait plein). En ordonnée, est portée la tension (en volts/Li/Li$^+$) et en abscisse, est portée la capacité spécifique (en mAh/g) ;
- la figure 2 est un graphique qui montre l'évolution de la capacité spécifique (en mAh/g) du composé de l'exemple 1 ($LiFe_{0,95}B_{0,033}PO_4$) en fonction du nombre de cycles et à différents régimes (dans l'ordre des nombres de cycles croissants C/10, C/1, C/3, C/2, C/1) ;
- la figure 3 est un graphique montrant la courbe de cyclage intentiostatique du composé $LiFePO_4$ non dopé.

Exemple 1

Préparation du composé selon l'invention de formule $LiFe_{0,95}B_{0,033}PO_4$.

On prépare de l'orthophosphate de Fe(II) en tant qu'intermédiaire réactionnel par précipitation dans une phase aqueuse à partir de $FeSO_4.7H_2O$ en milieu $Na_3PO_4$, le précipité se forme immédiatement. 10, 16 g de l'orthophosphate $Fe_3(PO_4)_2,5H_2O$ ainsi obtenus sont ensuite mélangés intimement à 2,76 g de $Li_3PO_4$ et 0,23 g de $BPO_4$ dans un broyeur sous atmosphère neutre (Ar ou $N_2$) pendant au moins 8 heures.

Le mélange résultant est ensuite traité thermiquement sous atmosphère neutre pendant 15 minutes à une température de 600°C.

On obtient une olivine dopée au bore avec un rapport atomique B/Fe = 0,035 et de formule $LiFe_{0,95}B_{0,33}PO_4$ .

Exemple 2

Préparation du composé selon l'invention de formule $LiMn_{0,95}B_{0,033}PO_4$.

15,47 g de phosphate de manganèse (II) de forme hureaulite ($Mn_5(PO_4)_2(PO_3OH)_2,4H_2O$) sont mélangés intimement à 2,52 g de $MnCO_3,xH_2O$ x $\approx$ 0,2, 4,92 g de $Li_3PO_4$ et 0,40 g de $BPO_4$ dans un broyeur sous atmosphère neutre (Ar ou $N_2$) pendant au moins 8 heures.

Le mélange résultant est ensuite traité thermiquement sous atmosphère neutre pendant 15 minutes à une température de 600°C.

On obtient une olivine dopée au bore avec un rapport atomique B/Mn = 0,035 et de formule $Mn_{0,95}B_{0,033}PO_4$.

Exemple 3

Préparation du composé selon l'invention de formule $Li_3Fe_{1,93}B_{0,07}(PO_4)_3$.

15,0 g de $FePO_4$, $xH_2O$ (M = 188,04 g/mol), 6,74 g de $Na_3PO_4$ et 0,304 g de $BPO_4$ sont mélangés intimement sous air dans un broyeur planétaire pendant 20 heures. Ce mélange activé mécano-chimiquement subit alors un traitement thermique à 800°C sous air pendant 15 minutes. Un composé de structure isotype du Nasicon de formulation voisine de $Na_3Fe_{1,93}B_{0,07}(PO_4)_3$ est obtenu. Le composé final de formule $Li_3Fe_{1,93}B_{0,07}(PO_4)_3$ est alors obtenu par échange d'ions à partir de $Na_3Fe_{1,93}B_{0,07}(PO_4)_3$ dans une solution concentrée de $LiNO_3$ dans $H_2O$ avec $Li_{solution}/Na_{solide}$ > 10 pendant 1 jour.

Exemples 4

Exemple 4A

Fabrication d'un accumulateur au lithium dont l'électrode positive comprend le composé selon l'invention préparé dans l'exemple 1.

a) Fabrication de l'électrode positive

Le produit obtenu dans l'exemple 1 est mélangé à 80 % en masse à du noir d'acétylène (Super P, MMM Carbon, Belgique) (10 %) et du poly(fluorure de vinylidène) (Solef 6020, Solvay, Belgique) (10 %) dissous dans de la N-méthyl-pyrrolidone.

Le mélange est ensuite enduit sur une feuille d'aluminium, puis séché à 60°C, puis porté à 100°C sous vide.

b) Fabrication de l'accumulateur

L'électrode positive ainsi réalisée est introduite dans une cellule type « pile bouton » format 2432. L'électrode négative est constituée d'une feuille de lithium de qualité batterie (Chemetall-Foote corporation, USA). Le séparateur est constitué d'un film de polypropylène microporeux (Celgard 3200, Aventis). L'électrolyte utilisé est composé de carbonate d'éthylène, de carbonate de di-méthyle, et d'hexafluorophosphate de lithium ($LiPF_6$) (Electrolyte Selectipur LP30, Merck, RFA).

c) Essais réalisés avec l'accumulateur

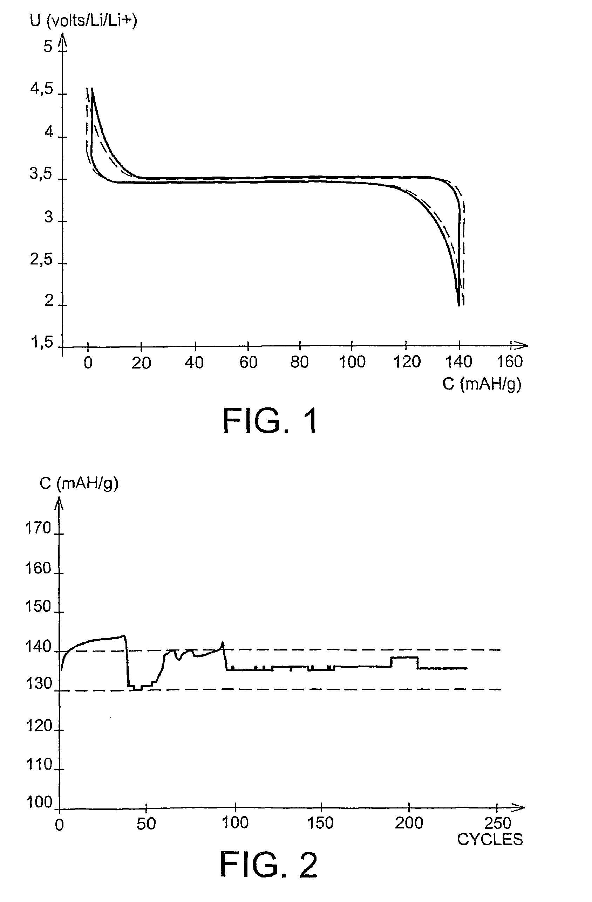

Comme on peut le constater sur la figure 1, à 25°C, la batterie ainsi constituée opère entre 4,5 V et 2,0 V et permet l'extraction/insertion réversible de lithium correspondant à environ 140 mAh/g de composé actif positif à un régime de C/2, c'est-à-dire avec une charge ou une décharge en deux heures (courbe en trait plein); et à environ 145 mAh/g à C/10, c'est-à-dire avec une charge ou une décharge en 10 heures (courbe en traits continus).

En d'autres termes, le régime de charge et de décharge à C/2 permet d'obtenir une capacité spécifique de 140 mAh/g.

Sur la figure 2, on a représenté l'évolution de la capacité spécifique (mAh/g) de composé $LiFe_{0,95}B_{0,033}PO_4$ proposé dans l'exemple 1, en fonction du nombre de cycles et à différents régimes (C/10, C/1, C/3, C/2, C/1).

On constate sur la figure 2 que la capacité spécifique obtenue à faible régime (C/10) est peu affectée par l'augmentation de régime (C/1)

Exemple 4B

On fabrique un accumulateur de la même manière que dans l'exemple 4A à la seule différence que l'on utilise dans l'électrode positive le composé selon l'invention préparé dans l'exemple 2. Les caractéristiques de l'accumulateur, notamment en matière de capacité spécifique, sont similaires à celles de l'accumulateur de l'exemple 4A.

Exemple 4C

On fabrique un accumulateur de la même manière que dans l'exemple 4A à la seule différence que l'on utilise dans l'électrode positive le composé selon l'invention préparé dans l'exemple 3. Les caractéristiques de l'accumulateur, notamment en matière de capacité spécifique, sont similaires à celles de l'accumulateur de l'exemple 4A.

Exemple 5 (comparatif)

Dans cet exemple, on fabrique, de ma même manière que dans l'exemple 4, un accumulateur au lithium, mais dont l'électrode positive est constituée de $LiFePO_4$ non dopé par le bore, c'est-à-dire par un composé non conforme à l'invention.

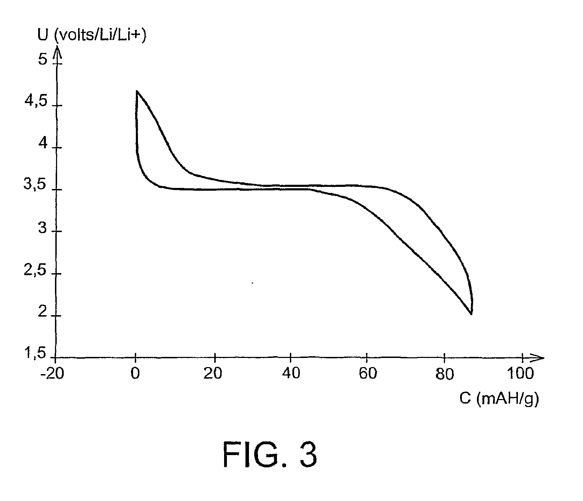

La courbe de cyclage en intentiostatique du composé $LiFePO_4$ non dopé est représentée sur la figure 3. La capacité spécifique pour ce matériau sans bore est de 80 mAh/g, donnée par la figure 3, pour un régime de C/7 et correspondant à une densité de courant imposée à l'électrode de 17 $\mu A/cm^2$.

Cette valeur de 80 mAh/g, obtenue pour un régime de C/7, beaucoup moins contraignant que C/2, est à comparer à la valeur de capacité spécifique de 140 mAh/g obtenue avec le composé selon l'invention dans l'exemple 4A par un régime contraignant de C/2.

Exemple 6 (comparatif)

Dans cet exemple, on fabrique, de la même manière que dans l'exemple 4, un accumulateur au lithium, mais dont l'électrode positive est constituée de $LiMnPO_4$ non dopé par le bore.

Le tableau I suivant montre la comparaison des performances électrochimiques en terme de capacité délivrée (énergie disponible à 25°C) des accumulateurs des exemples 4A, 5 et 6.

Tableau I

| | Composés | Cyclage | Capacité délivrée (mAh/g) |
|---|---|---|---|
| Exemple 5 (comparatif) | $LiFePO_4$ Non dopé Par B | C/10 C/2 | 85 50 |
| Exemple 6 (comparatif) | $LiMnPO_4$ Non dopé Par B | C/10 | 80 |
| Exemple 4A (invention) | $LiFe_{0,95}B_{0,033}PO_4$ | C/10 C/2 | 145 140 |

Il ressort du tableau que le dopage au bore procure un gain sur la capacité de 40% à C/10 et de 65 % à C/2.

Plus le régime est rapide, plus le gain obtenu sur la capacité, du fait du dopage au bore du composé de l'invention, est important.

Ce tableau démontre bien que la cinétique d'insertion du lithium est améliorée par le dopage au bore des composés selon l'invention.

Des améliorations équivalentes des propriétés sont obtenues avec les accumulateurs des exemples 4B (composé selon l'invention de l'exemple 2) et 4C (composé selon l'invention de l'exemple 3).

**Revendications**

1.   Composé d'insertion du lithium répondant à la formule (I) suivante :

$$Li_\alpha M_\beta Ml_v M2_w M3_x M4_y M5_z B_\gamma (XO_{4-\epsilon} Z_\epsilon) \qquad (I)$$

- M est un élément à l'état d'oxydation +2, choisi parmi $V^{2+}$, $Mn^{2+}$, $Fe^{2+}$, $Co^{2+}$ et $Ni^{2+}$;
- M1 est un élément à l'état d'oxydation +1, choisi parmi $Na^+$ et $K^+$ ;
- M2 est un élément à l'état d'oxydation +2, choisi parmi $Mg^{2+}$, $Zn^{2+}$, $Cu^{2+}$, $Ti^{2+}$ et $Ca^{2+}$;
- M3 est un élément à l'état d'oxydation +3, choisi parmi $Al^{3+}$, $Ti^{3+}$, $Cr^{3+}$, $Fe^{3+}$ $Mn^{3+}$ $Ga^{3+}$ et $V^{3+}$ ;
- M4 est un élément à l'état d'oxydation +4, choisi parmi $Ti^{4+}$, $Ge^{4+}$, $Sn^{4+}$, $V^{4+}$ et $Zr^{4+}$;
- M5 est un élément à l'état d'oxydation +5, choisi parmi $V^{5+}$, $Nb^{5+}$, et $Ta^{5+}$;
- X est un élément à l'état d'oxydation m, où m est un nombre entier, par exemple de 2 à 6, résidant exclusivement en site tétraédrique et coordonné par l'oxygène ou un halogène, qui est choisi parmi $B^{3+}$, $Al^{3+}$, $V^{5+}$ $Si^{4+}$ $P^{5+}$, $S^{6+}$, $Ge^{4+}$ et leurs mélanges ;
- Z est un halogène choisi parmi F, Cl, Br et I ;
- les coefficients $\alpha$, $\beta$, v, w, x, y, z, $\gamma$ et $\epsilon$ sont tous positifs et satisfont aux relations suivantes :
- $0 \leq \alpha \leq 2$ (1) ;
- $1 \leq \beta \leq 2$ (2) ;
- $0 < \gamma$ (3) ;
- $0 \leq \alpha \leq 2$ (3) ;
- $0 \leq \epsilon \leq 2$ (4) ;
- $\alpha + 2\beta + 3\gamma + v + 2w + 3x + 4y + 5z + m = 8 - \epsilon$ (5) ; et

- $0 < \dfrac{\gamma}{\beta + v + w + x + y + z} \leq 0,1$, de préférence, $0 < \dfrac{\gamma}{\beta + v + w + x + y + z} \leq 0,05$.

2.   Composé selon la revendication 1, dans lequel M est $Fe^{2+}$, X est P, et v, w, x, y, z et $\epsilon$ sont égaux à 0 et qui répond à la formule (II) suivante :

$$Li_\alpha Fe_\beta B_\gamma PO_4 \qquad (II)$$

3.   Composé selon la revendication 1, dans lequel M est $Mn^{2+}$, X est P, et v, w, x, y, z et $\epsilon$ sont égaux à 0 et qui répond à la formule (III) suivante :

$$Li_\alpha Mn_\beta B_\gamma PO_4 \qquad (III)$$

4.   Composé selon la revendication 2, dans lequel $\alpha$ = 1 et qui répond à la formule (IV) suivante :

$$LiFe_{\beta}B_{\gamma}PO_4 \qquad (IV)$$

avec $\gamma/\beta \leq 0,1$.

**5.** Composé selon la revendication 3, dans lequel $\alpha = 1$ et qui répond à la formule (V) suivante :

$$LiMn_{\beta}B_{\gamma}PO_4 \qquad (V)$$

avec $\gamma/\beta \leq 0,1$.

**6.** Composé selon la revendication 4, qui est le $LiFe_{0,95}B_{0,033}PO_4$.

**7.** Composé selon la revendication 4, qui est le $Li_3Fe_{1,93}B_{0,07}(PO_4)_3$.

**8.** Composé selon la revendication 5, qui est le $LiMn_{0,95}B_{0,033}PO_4$.

**9.** Procédé de préparation d'un composé d'insertion du lithium selon l'une quelconque des revendications 1 à 8, dans lequel on fait réagir les éléments nécessaires à la formation d'un composé de structure olivine ou Nasicon avec au moins un composé du bore de formule $BXO_{4-\epsilon}Z_{\epsilon}$ (VI), où X, Z et $\epsilon$ ont la signification déjà donnée dans la revendication 1, pour donner le composé d'insertion du lithium de formule (I).

**10.** Procédé selon la revendication 9, dans lequel ledit composé du bore est choisi parmi $BPO_4$, $BVO_4$, $BAsO_4$, le verre $2B_2O_3$-$3SiO_2$ et leurs mélanges.

**11.** Procédé selon l'une quelconque des revendications 9 et 10, qui est un procédé par voie humide, dans lequel les éléments nécessaires à la formation du composé de structure Nasicon ou olivine et le composé du bore sont sous forme de poudres et qui comprend une étape de traitement thermique.

**12.** Procédé selon l'une quelconque des revendications 9 et 10, qui est un procédé par voie humide, dans lequel les éléments nécessaires à la formation du composé de structure Nasicon ou olivine et le composé du bore sont ajoutés à un solvant et qui comprend une étape de cristallisation.

**13.** Matériau actif d'électrode contenant un ou plusieurs composés selon l'une quelconque des revendications 1 à 8, éventuellement associé(s) à un ou plusieurs autres composés actifs, tels que $LiCoO_2$, $LiNiO_2$, les oxydes de manganèse, en particulier, de structure spinelle $Li_{1+x}Mn_{2-x}O_4$ (avec $0 \leq x \leq 0,33$), par exemple $LiMn_2O_4$, les composés de la famille isotype de l'olivine, tels que $Li_{1-x}FePO_4$, par exemple $LiFePO_4$, les composés de la structure du Nasicon, et les matériaux d'insertion du lithium du type orthosilicate.

**14.** Electrode positive comprenant le matériau actif selon la revendication 13.

**15.** Accumulateur comprenant l'électrode selon la revendication 14.

**16.** Dispositif électrochrome comprenant le composé selon l'une quelconque des revendications 1 à 8.

**Claims**

**1.** Lithium insertion compound having the following formula (I):

$$Li_{\alpha}M_{\beta}M1_vM2_wM3_xM4_yM5_zB_{\gamma}(XO_{4-\epsilon}Z_{\epsilon}) \qquad (I)$$

- M is an element in oxidation state +2, selected from $V^{2+}$, $Mn^{2+}$, $Fe^{2+}$, $Co^{2+}$ and $Ni^{2+}$;
- M1 is an element in oxidation state +1, selected from $Na^+$ and $K^+$;
- M2 is an element in oxidation state +2, selected from $Mg^{2+}$, $Zn^{2+}$, $Cu^{2+}$, $Ti^{2+}$, and $Ca^{2+}$;
- M3 is an element in oxidation state +3, selected from $Al^{3+}$, $Ti^{3+}$, $Cr^{3+}$, $Fe^{3+}$, $Mn^{3+}$, $Ga^{3+}$, and $V^{3+}$
- M4 is an element in oxidation state +4, selected from $Ti^{4+}$, $Ge^{4+}$, $Sn^{4+}$, $V^{4+}$, and $Zr^{4+}$;
- M5 is an element in oxidation state +5, selected from $V^{5+}$, $Nb^{5+}$, and $Ta^{5+}$;

- X is an element in oxidation state m, where m is an integer, for example from 2 to 6, exclusively occupying a tetrahedral site and coordinated by oxygen or a halogen, which is selected from $B^{3+}$, $Al^{3+}$, $V^{5+}$, $Si^{4+}$, $P^{5+}$, $S^{6+}$, $Ge^{4+}$ and mixtures thereof;
- Z is a halogen selected from F, Cl, Br and I;
- the coefficients ($\alpha,\beta,v,w,x,y,z,\gamma$ and $\varepsilon$ are all positive and satisfy the following equations:
- $0 \leq \alpha \leq 2$ (1);
- $1 \leq \beta \leq 2$ (2);
- $0 < \gamma$ (3) ;
- $0 \leq \alpha \leq 2$ (3) ;
- $0 \leq \varepsilon \leq 2$ (4);
- $\alpha + 2\beta + 3\gamma + v + 2w + 3x + 4y + 5z + m = 8 - \varepsilon$ (5) ; and

- $0 < \dfrac{\gamma}{\beta + v + w + x + y + z} \leq 0.1$, preferably, $0 < \dfrac{\gamma}{\beta + v + w + x + y + z} \leq 0.05$.

2. Compound according to Claim 1, in which M is $Fe^{2+}$, X is P, and v, w, x, y, z, and $\varepsilon$ are equal to 0 and which has the following formula (II):

$$Li_{\alpha}Fe_{\beta}B_{\gamma}PO_4 \qquad (II)$$

3. Compound according to Claim 1, in which M is $Mn^{2+}$, X is P, and v, w, x, y, z, and $\varepsilon$ are equal to 0 and which has the following formula (III):

$$Li_{\alpha}Mn_{\beta}B_{\gamma}PO_4 \qquad (III)$$

4. Compound according to Claim 2, in which $\alpha = 1$ and which has the following formula (IV):

$$LiFe_{\beta}B_{\gamma}PO_4 \qquad (IV)$$

with $\gamma/\beta \leq 0.1$.

5. Compound according to Claim 3, in which $\alpha = 1$ and which has the following formula (V):

$$LiMn_{\beta}B_{\gamma}PO_4 \qquad (V)$$

with $\gamma/\beta \leq 0.1$.

6. Compound according to Claim 4, which is $LiFe_{0.95}B_{0.033}PO_4$.

7. Compound according to Claim 4, which is $Li_3Fe_{1.93}B_{0.07}(PO_4)_3$.

8. Compound according to Claim 5, which is $LiMn_{0.95}B_{0.033}PO_4$.

9. Method for preparing a lithium insertion compound according to one of Claims 1 to 8, in which the elements necessary for the formation of a compound with an olivine or Nasicon structure are reacted with at least one boron compound with the formula $BXO_{4-\varepsilon}Z_{\varepsilon}$ (VI) where X, Z and s have the meanings already given in Claim 1, to yield the lithium insertion compound having formula (I).

10. Method according to Claim 9, in which said boron compound is selected from $BPO_4$, $BVO_4$, $BAsO_4$, $2B_2O_3 \cdot 3SiO_2$ glass and mixtures thereof.

11. Method according to either of Claims 9 and 10, which is a wet method, in which the elements necessary for the formation of the compound with a Nasicon or olivine structure and the boron compound are in powder form and which comprises a heat treatment step.

12. Method according to either of Claims 9 and 10, which is a wet method, in which the elements necessary for the formation of the compound with a Nasicon or olivine structure and the boron compound are added to a solvent and which comprises a crystallization step.

13. Active electrode material containing one or more compounds according to any one of Claims 1 to 8, possibly combined with one or more other active compounds, such as $LiCoO_2$, $LiNiO_2$, manganese oxides, in particular with a spinel structure $Li_{1+x}Mn_{2-x}O_4$ (with $0 \le x \le 0.33$), for example $LiMn_2O_4$, compounds of the olivine isotype family, such as $Li_{1-x}FePo_4$, for example $LiFePo_4$, compounds having the Nasicon structure, and lithium insertion materials of the orthosilicate type.

14. Positive electrode comprising the active material according to Claim 13.

15. Battery comprising the electrode according to Claim 14.

16. Electrochromic device comprising the compound according to any one of Claims 1 to 8.

**Patentansprüche**

1. Lithiuminsertions-Verbindung mit der folgenden Formel (I):

$$Li_\alpha M_\beta M1_v M2_w M3_x M4_y M5_z B_\gamma (XO_{4-\varepsilon} Z_\varepsilon) \qquad (I)$$

worin:

- M steht für ein Element im Oxidationszustand +2, ausgewählt aus der Gruppe $V^{2+}$, $Mn^{2+}$, $Fe^{2+}$, $CO^{2+}$ und $Ni^{2+}$;
- M1 steht für ein Element im Oxidationszustand +1, ausgewählt aus der Gruppe $Na^+$ und $K^+$;
- M2 steht für ein Element im Oxidationszustand +2, ausgewählt aus der Gruppe $Mg^{2+}$, $Zn^{2+}$, $Cu^{2+}$, $Ti^{2+}$ und $Ca^{2+}$;
- M3 steht für ein Element im Oxidationszustand +3, ausgewählt aus der Gruppe $Al^{3+}$, $Ti^{3+}$, $Cr^{3+}$, $Fe^{3+}$, $Mn^{3+}$, $Ga^{3+}$ und $V^{3+}$;
- M4 steht für ein Element im Oxidationszustand +4, ausgewählt aus der Gruppe $Ti^{4+}$, $Ge^{4+}$, $Sn^{4+}$, $V^{4+}$ und $Zr^{4+}$;
- M5 steht für ein Element im Oxidationszustand +5, ausgewählt aus der Gruppe $V^{5+}$, $Nb^{5+}$ und $Ta^{5+}$;
- X steht für ein Element im Oxidationszustand m, wobei m eine ganze Zahl, beispielsweise 2 bis 6, bedeutet, das ausschließlich iin einer Tetraeder-Position angeordnet und durch Sauerstoff oder ein Halogen koordinativ gebunden ist, ausgewählt aus der Gruppe $B^{3+}$, $Al^{3+}$, $V^{5+}$, $Si^{4+}$, $P^{5+}$, $S^{6+}$, $Ge^{4+}$ und ihren Mischungen;
- Z steht für ein Halogenatom, ausgewählt aus der Gruppe F, Cl, Br und I;
- die Koeffizienten $\alpha$, $\beta$, v, w, x, y, z, $\gamma$ und $\varepsilon$ alle positiv sind und den folgenden Beziehungen genügen:
- $0 \le \alpha \le 2$ (1);
- $1 \le \beta \le 2$ (2);
- $0 < \gamma$ (3);
- $0 \le \alpha \le 2$ (3)
- $0 \le \varepsilon \le 2$ (4);
- $\alpha + 2\beta + 3\gamma + v + 2w + 3x + 4y + 5z + m = 8 - \varepsilon$ (5) und

$$- \ 0 < \frac{\gamma}{\beta + v + w + x + y + z} \ (6), \text{vorzugsweise } 0 < \frac{\gamma}{\beta + v + w + x + y + z} \le 0{,}05.$$

2. Verbindung nach Anspruch 1, in der M für $Fe^{2+}$ steht, X für P steht und v, w, x, y, z und $\varepsilon$ die Zahl 0 bedeuten, wobei die Verbindung der folgenden Formel (II) entspricht:

$$Li_\alpha Fe_\beta B_\gamma PO_4 \qquad (II)$$

3. Verbindung nach Anspruch 1, in der M für $Mn^{2+}$ steht, X für P steht und v, w, x, y, z und die Zahl 0 bedeuten, wobei die Verbindung der folgenden Formel (III) entspricht:

$$Li_\alpha Mn_\beta B_\gamma PO_4 \qquad (III)$$

4. Verbindung nach Anspruch 2, in der $\alpha$ für die Zahl 1 steht, wobei die Verbindung der folgenden Formel (IV) entspricht:

$$LiFe_\beta B_\gamma PO_4 \qquad (IV)$$

mit $\gamma/\beta \le 0{,}1$.

5. Verbindung nach Anspruch 3, in der α für die Zahl 1 steht, wobei die Verbindung der folgenden Formel (V) entspricht:

$$LiMn_\beta B_\gamma PO_4 \qquad (V)$$

mit $\gamma/\beta \le 0,1$.

6. Verbindung nach Anspruch 4, bei der es sich handelt um $LiFe_{0,95}B_{0,033}PO_4$.

7. Verbindung nach Anspruch 4, bei der es sich handelt um $Li_3Fe_{1,93}B_{0,07}(PO_4)_3$.

8. Verbindung nach Anspruch 5, bei der es sich handelt um $LiMn_{0,95}B_{0,033}PO_4$.

9. Verfahren zur Herstellung einer Lithiuminsertions-Verbindung nach einem der Ansprüche 1 bis 8, bei dem man die für die Bildung einer Verbindung mit Olivin- oder Nasicon-Struktur erforderüchen Elemente reagieren lässt mit mindestens einer Borverbindung der Formel $BXO_{4-\varepsilon}Z_\varepsilon$ (VI), worin X, Z und ε die in Anspruch 1 angegebenen Bedeutungen haben, zur Bildung der Lithiuminsertions-Verbindung der Formel (I).

10. Verfahren nach Anspruch 9, bei dem die genannte Borverbindung ausgewählt wird aus der Gruppe $BPO_4$, $BVO_4$, $BAsO_4$, dem Glas $2B_2O_3$-$3SiO_2$ und Mischungen davon.

11. Verfahren nach einem der Ansprüche 9 und 10, bei dem es sich um ein Nassverfahren handelt, bei dem die für die Bildung der Verbindung mit Nasicon- oder Olivin-Struktur erforderlichen Elemente und die Borverbindung alle in Form von Pulvern vorliegen und das eine thermische Behandlungsstufe umfasst.

12. Verfahren nach einem der Ansprüche 9 und 10, bei dem es sich um ein Nassverfahren handelt, bei dem die für die Bildung der Verbindung mit Nasicon- oder Olivin-Struktur erforderlichen Elemente und die Borverbindung einem Lösungsmittel zugesetzt werden und das eine Kristallisationsstufe umfasst.

13. Aktives Elektrodenmaterial, das eine oder mehrere Verbindungen nach einem der Ansprüche 1 bis 8, gegebenenfalls in Kombination mit einer oder mehreren anderen (weiteren) aktiven Verbindungen, wie z.B. $LiCoO_2$, $Li$-$NiO_2$, Manganoxiden und insbesondere solchen mit Spinell-Struktur $Li_{1+x}Mn_{2-}\times O_4$ (mit $0 \le x \le 0,33$), wie z.B. $LiMn_2O_4$, Verbindungen der Familie vom Olivin-Isotyp, wie z.B. $Li_{1-x}FePO_4$, beispielsweise $LiFePO_4$, Verbindungen mit Nasicon-Struktur und Lithiuminsertions-Materialien vom Orthosilicat-Typ enthält.

14. Positive Elektrode, die das aktive Material nach Anspruch 13 umfasst.

15. Akkumulator, der die Elektrode nach Anspruch 14 umfasst.

16. Elektrochrome Vorrichtung, welche die Verbindung nach einem der Ansprüche 1 bis 8 umfasst.

FIG. 1

FIG. 2

FIG. 3